# EUROPÄISCHE PATENTSCHRIFT

(11) **EP 2 625 418 B1**
(45) Veröffentlichungstag und Bekanntmachung des Hinweises auf die Patenterteilung: **02.03.2016**
(21) Anmeldenummer: 11754389.2
(22) Anmeldetag: 07.09.2011
(51) Int. Cl.: F02M 59/02, F02M 59/10, F02M 59/44, F01L 1/14, F02M 63/00

(54) **LAGERELEMENT MIT DARIN DREHBAR GELAGERTER ROLLE, INSBESONDERE IM ANTRIEB EINES PUMPENKOLBENS EINER KRAFTSTOFFHOCHDRUCKPUMPE**
BEARING ELEMENT HAVING A ROLLER ROTATABLY MOUNTED THEREIN, IN PARTICULAR IN THE DRIVE OF A PUMP PISTON OF A HIGH-PRESSURE FUEL PUMP
ÉLÉMENT PALIER LOGEANT UN ROULEAU MONTÉ ROTATIF ET UTILISÉ EN PARTICULIER DANS LE MÉCANISME D'ENTRAÎNEMENT D'UN PISTON D'UNE POMPE À CARBURANT HAUTE PRESSION

(30) Priorität: 06.10.2010 DE 102010042025
(43) Veröffentlichungstag der Anmeldung: 14.08.2013
(73) Patentinhaber: Robert Bosch GmbH, 70442 Stuttgart (DE)
(72) Erfinder: BOECKING, Friedrich, 70499 Stuttgart (DE); DUTT, Andreas, 70469 Stuttgart (DE)
(86) Internationale Anmeldenummer: PCT/EP2011/065433
(87) Internationale Veröffentlichungsnummer: WO 2012/045541

(56) Entgegenhaltungen:
- EP-A1- 0 770 763
- DE-A1-102004 002 487
- DE-A1-102006 012 458
- US-A- 4 361 120

## Beschreibung

### Stand der Technik

Die Erfindung geht aus von einem Lagerelement mit darin drehbar gelagerter Rolle, insbesondere im Antrieb eines Pumpenkolbens einer Kraftstoffhochdruckpumpe, nach der Gattung des Anspruchs 1.

Ein solches Lagerelement ist durch die DE 10 2006 012 458 A1 bekannt. Dieses Lagerelement ist im Antrieb eines Pumpenkolbens einer Kraftstoffhochdruckpumpe vorgesehen. Das Lagerelement weist eine konkav gekrümmte Ausnehmung auf, in der eine zumindest annähernd zylinderförmige Rolle drehbar gelagert ist. Im Querschnitt senkrecht zur Drehachse der Rolle betrachtet umgibt die Ausnehmung die Rolle in einem in Richtung der Drehachse der Rolle gesehen mittleren Bereich über einen Winkel von weniger als 180° und in seitlichen Bereichen über einen Winkel von mehr als 180°. Die Ausnehmung weist einen zumindest annähernd kreisförmig gekrümmten zentralen Bereich auf, in dem der Radius des Ausnehmung gleich oder nur wenig größer ist als der Radius der Rolle und in dem die Rolle somit mit geringem Spiel geführt ist. Bei dem bekannten Lagerelement erstreckt sich der zentrale Bereich der Ausnehmung mit der engen Führung der Rolle im mittleren Bereich über einen Winkel von weniger als 180° und in den seitlichen Bereichen über einen Winkel von mehr als 180° um die Rolle. Bei einer auch nur leichten Schrägstellung der Rolle in der Ausnehmung gelangt die Rolle in ihren Endbereichen in Anlage an seitlichen Kanten der Ausnehmung, wodurch die Drehbewegung der Rolle gehemmt wird. Dies führt zu Verschleiss des Lagerelements und/oder der Rolle, so dass sich unter Umständen die Rolle in der Ausnehmung nicht mehr dreht und es dann zum Ausfall der Kraftstoffhochdruckpumpe kommt. Außerdem ist die Ein- und Ausströmung von Medium bei der Ausnehmung nicht optimal.

Durch die EP 0 770 763 A1 ist ein Lagerelement bekannt, das eine konkav gekrümmte Ausnehmung aufweist, in der eine zumindest annähernd zylinderförmige Rolle drehbar gelagert ist. Im Querschnitt senkrecht zur Drehachse der Rolle betrachtet umgibt die Ausnehmung die Rolle über einen Winkel von mehr als 180°. Die Ausnehmung weist einen zumindest annähernd kreisförmig gekrümmten zentralen Bereich auf, in dem der Radius des Ausnehmung gleich oder nur wenig größer ist als der Radius der Rolle und in dem die Rolle somit mit geringem Spiel geführt ist. Bei dem bekannten Lagerelement erstreckt sich der zentrale Bereich der Ausnehmung mit der engen Führung der Rolle über einen Winkel von deutlich größer als 180° um die Rolle. Bei einer auch nur leichten Schrägstellung der Rolle in der Ausnehmung gelangt die Rolle in ihren Endbereichen in Anlage an seitlichen Kanten der Ausnehmung, wodurch die Drehbewegung der Rolle gehemmt wird. Darüberhinaus ist auch bei diesem Lagerelement die Ein- und Ausströmung von Medium bei der Ausnehmung nicht optimal.

### Offenbarung der Erfindung

### Vorteile der Erfindung

Das erfindungsgemäße Lagerelement mit den Merkmalen gemäß Anspruch 1 hat demgegenüber den Vorteil, dass die Drehbewegung der Rolle auch bei einer Schrägstellung der Rolle in der Ausnehmung nicht behindert wird, so dass kein oder nur geringer Verschleiss des Lagerelements und/oder der Rolle auftritt und die Funktion der Kraftstoffhochdruckpumpe über eine ausreichende Lebensdauer sichergestellt ist. Außerdem ist die Ein- und Ausströmung von Medium bei der Ausnehmung verbessert.

In den abhängigen Ansprüchen sind vorteilhafte Ausgestaltungen und Weiterbildungen des erfindungsgemäßen Lagerelements angegeben. Durch die Merkmale der Ansprüche 2 und 3 wird eine sichere Führung der Rolle in der Ausnehmung ohne die Gefahr des Verklemmens erreicht. Die Einströmung von Medium in die Ausnehmung ist durch die Ausbildung gemäß Anspruch 4 weiter verbessert. Die Ausströmung von Medium aus der Ausnehmung ist durch die Ausbildung gemäß Anspruch 5 weiter verbessert.

### Zeichnung

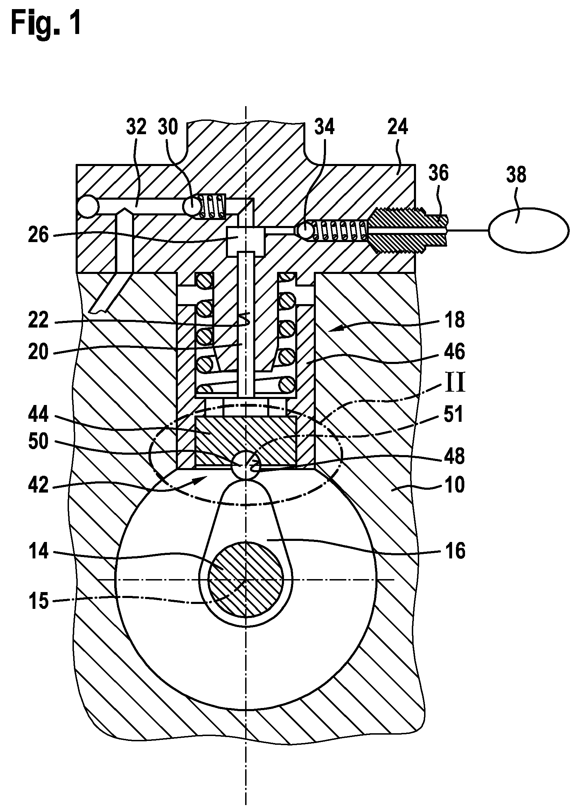

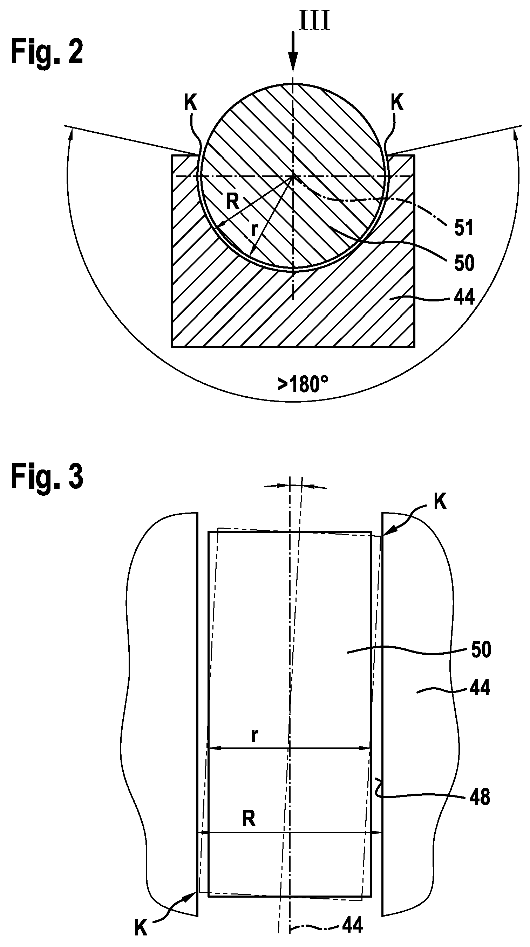

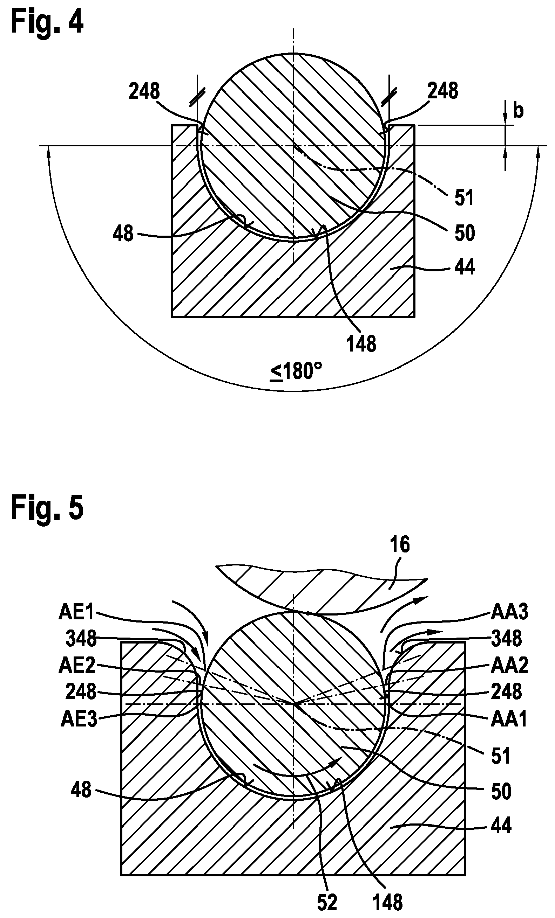

Ein Ausführungsbeispiele der Erfindung ist in der Zeichnung dargestellt und in der nachfolgenden Beschreibung näher erläutert. Es zeigen Figur 1 eine Kraftstoffhochdruckpumpe in einem Längsschnitt, Figur 2 ein Lagerelement der Kraftstoffhochdruckpumpe gemäß dem Ausschnitt II in Figur 1 in einem Querschnitt gemäß dem Stand der Technik, Figur 3 das Lagerelement von Figur 2 in einer Ansicht in Pfeilrichtung III in Figur 2, Figur 4 das Lagerelement im Querschnitt gemäß einer nicht erfindungsgemäßen Ausführungsform und Figur 5 das Lagerelement in einem Querschnitt gemäß einem Ausführungsbeispiel der Erfindung.

### Beschreibung des Ausführungsbeispiels

In Figur 1 ist eine Pumpe dargestellt, die insbesondere eine Kraftstoffhochdruckpumpe für eine Kraftstoffeinspritzeinrichtung einer Brennkraftmaschine ist. Die Pumpe weist ein Gehäuse 10 auf, das mehrteilig ausgebildet sein kann und in dem eine rotierend angetriebene Antriebswelle 14 um eine Drehachse 15 drehbar gelagert ist. Die Antriebswelle 14 weist wenigstens einen Nocken 16 auf, der auch ein Mehrfachnocken sein kann. Die Pumpe weist wenigstens ein oder mehrere Pumpenelemente 18 mit jeweils einem Pumpenkolben 20 auf, der durch den Nocken 16 der Antriebswelle 14 zumindest mittelbar in einer Hubbewegung in zumindest annähernd radialer Richtung zur Drehachse 15 der Antriebswelle 14 angetrieben wird. Es kann auch vorgesehen sein, dass die Pumpe keine eigene Antriebswelle 14 aufweist und der Pumpenkolben 20 des Pumpenelements 18 durch eine Welle der Brennkraftmaschine angetrieben wird, die einen Nocken 16 oder Exzenter aufweist.

Der Pumpenkolben 20 ist in einer Zylinderbohrung 22 eines Gehäuseteils 24 der Pumpe dicht geführt. Mit seinem der Antriebswelle 14 abgewandten Ende begrenzt der Pumpenkolben 20 in der Zylinderbohrung 22 einen Pumpenarbeitsraum 26. Der Pumpenarbeitsraum 26 weist über ein in diesen hinein öffnendes Einlassrückschlagventil 30 eine Verbindung mit einem beispielsweise von einer Förderpumpe herführenden Zulauf 32 auf, über den der Pumpenarbeitsraum 26 beim radial nach innen zur Drehachse 15 der Antriebswelle 14 gerichteten Saughub des Pumpenkolbens 20 mit Kraftstoff befüllt wird. Der Pumpenarbeitsraum 26 weist außerdem über ein aus diesem heraus öffnendes Auslassrückschlagventil 34 eine Verbindung mit einem Ablauf 36 auf, der beispielsweise zu einem Kraftstoffhochdruckspeicher 38 führt und über den beim radial nach außen von der Drehachse 15 der Antriebswelle 14 weg gerichteten Förderhub des Pumpenkolbens 20 Kraftstoff aus dem Pumpenarbeitsraum 26 verdrängt wird.

Der Pumpenkolben 20 stützt sich mittelbar über ein Stützelement in Form eines Rollenstößels 42 am Nocken 16 der Antriebswelle 14 ab. Der Rollenstößel 42 umfasst ein Lagerelement in Form eines Rollenschuhs 44, der in einen hohlzylinderförmigen Stößelkörper 46 eingesetzt sein kann. Der Rollenschuh 46 weist auf seiner der Antriebswelle 14 zugewandten Seite eine konkav gekrümmte Ausnehmung 48 auf, in der eine zumindest annähernd kreiszylinderförmige Rolle 50 drehbar gelagert ist, wobei die Drehachse der Rolle 50 mit 51 bezeichnet ist. Die Rolle 50 läuft auf dem Nocken 16 der Antriebswelle 14 ab. Das Gehäuse 10 der Kraftstoffhochdruckpumpe ist mit Kraftstoff gefüllt und durch den Kraftstoff erfolgt eine Schmierung zwischen der Rolle 50 und der Ausnehmung 48 des Rollenschuhs 44. Der Pumpenkolben 20 ist in Richtung seiner Längsachse 21 mit dem Rollenstößel 42 gekoppelt.

In Figur 2 ist der Rollenschuh 44 gemäß dem Stand der Technik in einem Querschnitt senkrecht zur Drehachse 51 der Rolle 50 dargestellt. Die Rolle 50 ist im Querschnitt senkrecht zu ihrer Drehachse 51 zumindest annähernd kreisförmig ausgebildet. Die Ausnehmung 48 ist im Querschnitt ebenfalls zumindest annähernd kreisförmig ausgebildet, wobei deren Radius R gleich oder nur wenig größer als der Radius r der Rolle 50 ist. Die Ausnehmung 48 umgibt die Rolle 50 auf deren Umfang über einen Winkelbereich von mehr als 180°, wodurch am Rollenschuh 44 Kanten K gebildet sind. Bei einer leichten Schrägstellung der Rolle 50 in der Ausnehmung 48 wie in Figur 3 dargestellt kann es zu einem Verklemmen der Rolle 50 kommen, da die Rolle 50 an den Kanten K anläuft.

In Figur 4 ist der Rollenschuh 44 gemäß einer nicht erfindungsgemäßen Ausführungsform dargestellt. Die Ausnehmung 48 des Rollenschuhs 44 weist im Querschnitt senkrecht zur Drehachse 51 der Rolle 50 betrachtet einen zentralen Bereich 148 auf, der zumindest annähernd kreisförmig ausgebildet ist und dessen Radius R nur wenig größer ist als der Radius r der Rolle 50. Die Rolle 50 ist somit nach Art eines Gleitlagers im zentralen Bereich 148 der Ausnehmung 48 des Rollenschuhs 44 mit geringem radialem Spiel drehbar gelagert. Der zentrale Bereich 148 der Ausnehmung 48 mit dem Radius R erstreckt sich über einen Winkelbereich von maximal etwa 180° über den Umfang der Rolle 50. Der zentrale Bereich 148 der Ausnehmung 48 erstreckt sich beiderseits einer die Drehachse 51 der Rolle 50 enthaltenden Mittelebene des Rollenschuhs 44.

Die Ausnehmung 48 des Rollenschuhs 44 weist im Querschnitt senkrecht zur Drehachse 51 der Rolle 50 betrachtet beiderseits an deren zentralen Bereich 148 in Umfangsrichtung anschließende Randbereiche 248 auf. Die Randbereiche 248 der Ausnehmung 48 sind so ausgebildet, dass sich mit zunehmendem Abstand vom zentralen Bereich 148 der Abstand zwischen der Oberfläche der Rolle 50 und den Randbereichen 248 vergrößert. Bei der in Figur 4 dargestellten Ausführungsform sind die Randbereiche 248 der Ausnehmung 48 zumindest annähernd eben ausgebildet und diese schließen sich zumindest annähernd in tangentialer Richtung an den zentralen Bereich 148 an. Der zentrale Bereich 148 der Ausnehmung 48 erstreckt sich über einen Winkelbereich von etwa 180° um die Rolle 50 herum und die Randbereiche 248 der Ausnehmung 48 verlaufen zumindest annähernd parallel zueinander. Die Randbereiche 248 erstrecken sich über eine die Drehachse 51 der Rolle 50 enthaltende Ebene des Rollenschuhs 44 um ein Maß b hinaus. Insgesamt erstreckt sich die Ausnehmung 48 über einen Winkelbereich von mehr als 180° um die Rolle 50, wobei jedoch der der eigentlichen Lagerung der Rolle 50 dienende zentrale Bereich 148 der Ausnehmung 48 auf einen Winkelbereich von etwa 180° begrenzt ist. Die Rolle 50 ist somit im zentralen Bereich 148 der Ausnehmung 48 über ihren Umfang drehbar gelagert und in den Randbereichen 248 der Ausnehmung 48 so geführt, dass die Drehachse 51 der Rolle 50 zumindest annähernd parallel zur Drehachse 15 der Antriebswelle 14 verläuft.

In Figur 5 ist der Rollenschuh 44 mit der Ausnehmung 48 gemäß einem Ausführungsbeispiel der Erfindung dargestellt. Die Ausnehmung 48 weist dabei wie bei der Ausführungsform gemäß Figur 4 den zentralen Bereich 148 auf, in dem die Rolle 50 mit geringem radialem Spiel drehbar gelagert ist, und die an den zentralen Bereich 148 anschließenden Randbereiche 248 auf. An die Randbereiche 248 schließen sich auf deren dem zentralen Bereich 148 abgeandten Seiten jeweils weitere Randbereiche 348 an, die abweichend zu den Randbereichen 248 ausgebildet sind. Alternativ kann auch nur auf einer Seite der Randbereiche 248 ein nachfolgend beschriebener weiterer Randbereich 348 vorgesehen sein. Die weiteren Randbereiche 348 sind konvex gewölbt ausgebildet, so dass diese mit zunehmendem Abstand von den Randbereichen 248 von der Rolle 50 wegverlaufen. Durch diese Ausbildung der weiteren Randbereiche 348 sind am Rollenschuh 44 Ein- und Auslaufbereiche der Rolle 50 in der Ausnehmung 48 gebildet, durch die die Ein- und Ausströmung von Kraftstoff in die Ausnehmung 48 hinein bzw. aus der Ausnehmung 48 heraus begünstigt wird. Der Einlaufbereich ist dabei auf der Seite der Ausnehmung 48 gebildet, auf der die Rolle 50 in deren Drehrichtung 52 gesehen bei deren Abrollen auf dem Nocken 16 in die Ausnehmung 48 eintritt und der Auslaufbereich ist auf der gegenüberliegenden Seite der Ausnehmung 48 gebildet.

Der Einlaufbereich des Rollenschuhs 44 ist so ausgebildet, dass sich der Abstand zwischen dem Randbereich 348 der Ausnehmung 48 und der Rolle 50 und damit der Durchflussquerschnitt für den Kraftstoff sich in Drehrichtung 52 der Rolle 50 kontinuierlich verringert. Dies bedeutet, dass im weiteren Randbereich 348 ein erster Durchflussquerschnitt AE1 größer ist als ein in Drehrichtung 52 der Rolle 50 versetzter Durchflussquerschnitt AE2, der wiederum größer ist als ein in Drehrichtung 52 weiter versetzter Durchflussquerschnitt AE3, der am Übergang vom Randbereich 148 zum zentralen Bereich 148 der Ausnehmung 48 liegt. Der Einlaufbereich bildet dabei vorzugsweise einen druckverlustreduzierten Konfusor, dessen Konfusorwinkel vorzugsweise etwa 60° beträgt. Der Auslaufbereich des Rollenschuhs 44 ist so ausgebildet, dass sich der Abstand zwischen dem Randbereich 348 der Ausnehmung 48 und der Rolle 50 und damit der Durchflussquerschnitt für den Kraftstoff sich in Drehrichtung 52 der Rolle 50 kontinuierlich vergrößert. Dies bedeutet, dass im weiteren Randbereich 348 ein am Übergang vom zentralen Bereich 148 zum Randbereich 248 der Ausnehmung 48 liegender erster Durchflussquerschnitt AA1 kleiner ist als ein in Drehrichtung 52 der Rolle 50 versetzter Durchflussquerschnitt AA2, der wiederum kleiner ist als ein in Drehrichtung 52 weiter versetzter Durchflussquerschnitt AA3, der am Austritt der Rolle 50 aus der Ausnehmung 48 liegt. Der Auslaufbereich bildet dabei vorzugsweise einen druckverlustreduzierten Diffusor, dessen Diffusorwinkel vorzugsweise kleiner als etwa 20° ist.

## Patentansprüche

1. Lagerelement mit darin drehbar gelagerter Rolle, insbesondere in einem Antrieb eines Pumpenkolbens einer Kraftstoffhochdruckpumpe, wobei das Lagerelement (44) eine konkav gekrümmte Ausnehmung (48) aufweist, in der die zumindest annähernd kreiszylinderförmige Rolle (50) drehbar gelagert ist, wobei die Ausnehmung (48) im Querschnitt senkrecht zur Drehachse (51) der Rolle (50) zumindest in einem zentralen Bereich (148) zumindest annähernd kreisabschnittförmig gekrümmt ist und deren Radius (R) gleich oder nur wenig größer ist als der Radius (r) der Rolle (50), wobei sich die Ausnehmung (48) über einen Winkelbereich von mehr als 180° über den Umfang der Rolle (50) erstreckt, wobei sich der zentrale Bereich (148) der Ausnehmung (48) über einen Winkelbereich von maximal etwa 180° über den Umfang der Rolle (50) erstreckt und wobei die Ausnehmung (48) an den zentralen Bereich (148) in Umfangsrichtung anschließende Randbereiche (248,348) aufweist, in denen die Ausnehmung (48) mit größerem radialem Abstand von der Rolle (50) verläuft als im zentralen Bereich (148), **dadurch gekennzeichnet, dass** der radiale Abstand zwischen den Randbereichen (248,348) der Ausnehmung (48) und der Rolle (50) mit zunehmendem Abstand vom zentralen Bereich (148) zunimmt, dass sich in Umfangsrichtung an die Randbereiche (248) wenigstens ein weiterer Randbereich (348) der Ausnehmung (48) anschließt und dass der wenigstens eine weitere Randbereich (348) zur Rolle (50) hin konvex gekrümmt ausgebildet ist.

2. Lagerelement nach Anspruch 1, **dadurch gekennzeichnet, dass** die Randbereiche (248) zumindest annähernd tangential an den zentralen Bereich (148) anschließend verlaufen.

3. Lagerelement nach Anspruch 2, **dadurch gekennzeichnet, dass** die Randbereiche (248) der Ausnehmung (48) zumindest annähernd eben ausgebildet sind und vorzugsweise zumindest annähernd parallel zueinander verlaufen.

4. Lagerelement nach einem der vorstehenden Ansprüche, **dadurch gekennzeichnet, dass** in Drehrichtung (52) der Rolle (50) gesehen der Randbereich (248,348) des Eintritts der Rolle (50) in die Ausnehmung (48) einen druckverlustreduzierten Konfusor bildet.

5. Lagerelement nach einem der vorstehenden Ansprüche, **dadurch gekennzeichnet, dass** in Drehrichtung (52) der Rolle (50) gesehen der Randbereich (248,348) des Austritts der Rolle (50) aus der Ausnehmung (48) einen druckverlustreduzierten Diffusor bildet.

6. Pumpe, insbesondere Kraftstoffhochdruckpumpe, mit wenigstens einem Pumpenkolben (20), der durch einen Nocken (16) einer Antriebswelle (14) über ein Stützelement (42) in einer Hubbewegung angetrieben wird, wobei das Stützelement (42) ein Lagerelement (44) aufweist, in dem eine auf dem Nocken (16) der Antriebswelle (14) abrollende Rolle (50) drehbar gelagert ist, **dadurch gekennzeichnet, dass** das Lagerelement (44) nach einem der vorstehenden Ansprüche ausgebildet ist.

## Claims

1. Bearing element with roller rotatably mounted therein, in particular in a drive of a pump piston of a high-pressure fuel pump, wherein the bearing element (44) has a concavely curved recess (48) in which the at least approximately circular-cylindrical roller (50) is rotatably mounted, wherein, in a cross section perpendicular to the axis of rotation (51) of the roller (50), the recess (48) has, at least in a central region (148), an at least approximately circular segment-shaped curvature, and the radius (R) of said recess is equal to or only slightly greater than the radius (r) of the roller (50), wherein the recess (48) extends over the circumference of the roller (50) over an angle range of more than 180°, wherein the central region (148) of the recess (48) extends over the circumference of the roller (50) over an angle range of at most approximately 180°, and wherein the recess (48) has edge regions (248, 348) which adjoin the central region (148) in a circumferential direction and in which the recess (48) runs at a greater radial distance from the roller (50) than in the central region (148), **characterized in that** the radial distance between the edge regions (248, 348) of the recess (48) and the roller (50) increases with increasing distance from the central region (148), **in that** the edge regions (248) are adjoined, in a circumferential direction, by at least one further edge region (348) of the recess (48), and **in that** the at least one further edge region (348) is formed so as to be convexly curved toward the roller (50).

2. Bearing element according to Claim 1, **characterized in that** the edge regions (248) run so as to adjoin the central region (148) at least approximately tangentially.

3. Bearing element according to Claim 2, **characterized in that** the edge regions (248) of the recess (48) are of at least approximately planar form, and preferably run at least approximately parallel to one another.

4. Bearing element according to one of the preceding claims, **characterized in that**, as viewed in the direction of rotation (52) of the roller (50), the edge region (248, 348) at which the roller (50) enters the recess (48) forms a pressure loss-reducing confuser.

5. Bearing element according to one of the preceding claims, **characterized in that**, as viewed in the direction of rotation (52) of the roller (50), the edge region (248, 348) at which the roller (50) exits the recess (48) forms a pressure loss-reducing diffuser.

6. Pump, in particular high-pressure fuel pump, having at least one pump piston (20) which is driven in reciprocating motion by a cam (16) of a drive shaft (14) via a support element (42), wherein the support element (42) has a bearing element (44) in which there is rotatably mounted a roller (50) which rolls on the cam (16) of the drive shaft (14), **characterized in that** the bearing element (44) is designed according to one of the preceding claims.

## Revendications

1. Élément de palier comprenant un rouleau supporté à rotation dans celui-ci, en particulier dans un entraînement d'un piston de pompe d'une pompe à carburant haute pression, l'élément de palier (44) présentant un évidement (48) de courbure concave dans lequel est supporté à rotation le rouleau (50) de forme au moins approximativement cylindrique, l'évidement (48), en section transversale perpendiculairement à l'axe de rotation (51) du rouleau (50), présentant une courbure au moins approximativement en portion de cercle au moins dans une région centrale (148) et son rayon (R) étant égal ou seulement légèrement supérieur au rayon (r) du rouleau (50), l'évidement (48) s'étendant sur une plage angulaire supérieure à 180° sur la périphérie du rouleau (50), la région centrale (58) de l'évidement (48) s'étendant sur une plage angulaire d'environ 180° au maximum sur la périphérie du rouleau (50) et l'évidement (48) présentant, au niveau de la région centrale (148), des régions de bord (248, 348) se raccordant dans la direction périphérique, dans lesquelles l'évidement (48) s'étend à une plus grande distance radiale du rouleau (50) que dans la région centrale (148), **caractérisé en ce que** la distance radiale entre les régions de bord (248, 348) de l'évidement (48) et le rouleau (50) augmente avec l'augmentation de la distance à la région centrale (58), **en ce qu'**au moins une région de bord supplémentaire (348) de l'évidement (48) se raccorde dans la direction périphérique aux régions de bord (248) et **en ce que** l'au moins une région de bord supplémentaire (348) est réalisée avec une courbe convexe vers le rouleau (50).

2. Élément de palier selon la revendication 1, **caractérisé en ce que** les régions de bord (248) s'étendent au moins approximativement tangentiellement en se raccordant à la région centrale (148).

3. Élément de palier selon la revendication 2, **caractérisé en ce que** les régions de bord (248) de l'évidement (48) sont réalisées au moins approximativement sous forme plane et s'étendent de préférence au moins approximativement parallèlement les unes aux autres.

4. Élément de palier selon l'une quelconque des revendications précédentes, **caractérisé en ce que** vue dans la direction de rotation (52) du rouleau (50), la région de bord (248, 348) de l'entrée du rouleau (50) dans l'évidement (48) forme un confuseur réduisant les pertes de pression.

5. Élément de palier selon l'une quelconque des revendications précédentes, **caractérisé en ce que** vue dans la direction de rotation (52) du rouleau (50), la région de bord (248, 348) de la sortie du rouleau (50) hors de l'évidement (48) forme un diffuseur réduisant les pertes de pression.

6. Pompe, en particulier pompe à carburant haute pression, comprenant au moins une pompe à piston (20) qui est entraînée par une came (16) d'un arbre d'entraînement (14) en un mouvement de course par le biais d'un élément de support (42), l'élément de support (42) présentant un élément de palier (44) dans lequel un rouleau (50) roulant sur la came (16) de l'arbre d'entraînement (14) est supporté à rotation, **caractérisée en ce que** l'élément de palier (44) est réalisé selon l'une quelconque des revendications précédentes.
